# EUROPEAN PATENT SPECIFICATION

(11) **EP 3 032 281 B1**
(45) Date of publication and mention of the grant of the patent: **25.09.2019**
(21) Application number: 14197492.3
(22) Date of filing: 11.12.2014
(51) Int. Cl.: G01T 1/24

(54) **SEMICONDUCTOR DRIFT DETECTOR FOR DETECTING RADIATION**
HALBLEITERDRIFTDETEKTOR ZUR DETEKTION VON STRAHLUNG
DÉTECTEUR DE DÉRIVE À SEMI-CONDUCTEUR POUR DÉTECTER UN RAYONNEMENT

(43) Date of publication of application: 15.06.2016
(73) Proprietor: PNSensor GmbH, 80803 München (DE)
(72) Inventor: LUTZ, Gerhard, 81739 München (DE)
(74) Representative: Maiwald Patent- und Rechtsanwaltsgesellschaft mbH

(56) References cited:
- EP-A1- 0 383 389
- EP-A1- 2 808 705
- EP-A2- 2 677 345
- WO-A1-00/28351
- US-A- 6 034 373

## Description

### FIELD OF THE INVENTION

The present invention relates to devices for detecting radiation. In particular, the present invention relates to a semiconductor drift detector for detecting radiation and to a scanning electron microscope (SEM), a transmission electron microscope (TEM), and an X-ray fluorescence spectroscope (XRF) comprising a semiconductor drift detector.

### BACKGROUND OF THE INVENTION

It is known in the prior art to use semiconductor drift detectors (SDD) for radiation detection. Here, the radiation to be detected generates signal electrons in a weakly doped, depleted semiconductor substrate, wherein several, in the simplest form, circular and concentrically arranged electrodes are arranged on a surface of the semiconductor substrate. The electrodes generate a drift field in the semiconductor substrate through which the signal electrons generated by the radiation drift to a centrally arranged read-out element that detects the signal electrons and thus the absorbed radiation. These conventional semiconductor drift detectors allow to quickly and very accurately measuring radiation-generated signal charges. This is due to the small capacity of the charge collection anode. Further improvement is achieved when the front end electronics or at least the input transistor is integrated into the drift detector. Then the parasitic capacitances that are usually associated with bond or cable connections are eliminated. Such semiconductor drift detectors have been used for spectroscopic investigations with the help of X-ray radiation for years. For example, such semiconductor drift detectors are used in electron microscopes to measure fluorescence radiation, the spectroscopic composition of which allows an item analysis, respectively the elemental composition of the investigated sample. It is, here, sometimes desirable to capture not only the photon-generated signal charge carriers in the semiconductor drift detector, but also to measure the ionization generated by incident electrons in the semiconductor drift detector. This is basically possible if the continuously incoming anode current and not the charge generated by single photons arriving in charge packages is measured.

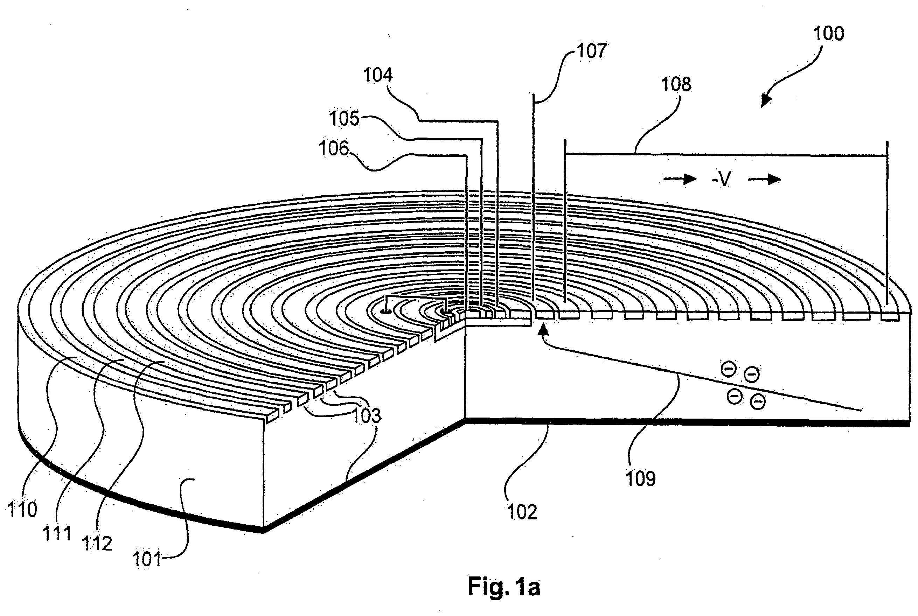

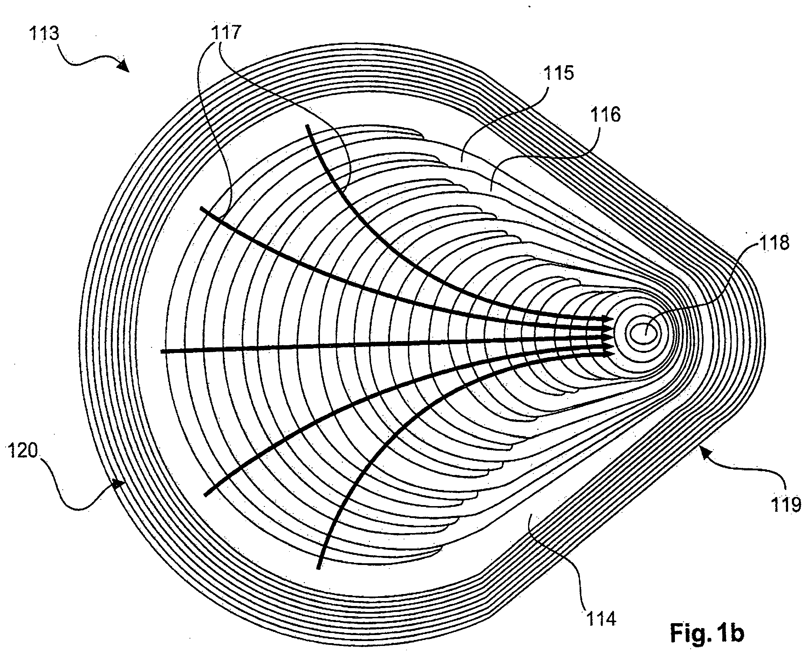

Typical semiconductor drift detectors known in the art consist of a large volume of n-type silicon bulk depleted from both sides. A homogeneous, shallow p+-n junction on the side where the incoming radiation enters the detector and a structure of circular p+ drift electrodes on the opposite side. By applying a negative voltage on the homogeneous back side, i.e., the radiation entrance window, and an increasingly negative voltage on the drift rings, a potential field distribution, i.e., a voltage gradient, is created inside the detector such that the electrons generated by the absorption of ionizing radiation drift towards a small sized collecting anode situated inside of the innermost drift ring. In an improved version of the semiconductor drift detector known in the prior art, the first amplification step is directly integrated into the sensor. This can be seen for example in the prior art semiconductor drift detector depicted in Fig. 1 a. In this semiconductor drift detector, a JFET transistor is directly integrated into the sensor. The connection of the anode to the transistor gate may be reduced to a small metal strip, like for example a few tenth of microns length. By this approach, parasitic capacitances related to large connection pads and long bonding wires are avoided. Unwanted effects like pick-up noise or microphony are suppressed. It is also possible to position the readout electrode (and the first transistor) asymmetrically into the drift detector as is shown in Fig. 1b. Here it is positioned at the edge outside of the sensitive volume and the drift structure is highly asymmetric. Still the readout node is enclosed by high bias voltage carrying drift rings.

An important advantage of such semiconductor drift detectors is the very low capacitive load to the read-out amplifier when compared to for example to a large sized PIN diode. Most prior art semiconductor drift detectors provide concentrically arranged drift rings. However, also asymmetrical geometries are available in which the collecting electrode and the integrated read-out transistor are located outside of the sensitive volume of the detector, which is the area that is sensitive to the radiation to be detected. The inventors of the present invention have found that in the prior art semiconductor drift detector the electrical connections to the charge collection area and to the read-out area disadvantageously have to spatially cross drift rings of the detector to which high voltages are applied. This may result in high electric fields and the danger of electrical breakdown. Furthermore, the inventors of the present invention found that the available space for the read out electronics that need to be integrated is fairly limited. It is hence complicated to integrate quite complex read out electronics, like for example charge sensitive pre-amplifiers, into the sensors of the prior art. For example, EP0383389 discloses a semiconductor drift detector according to the preamble of claim 1. However, the '389 patent does not include at least one of the plurality of drift elements being arranged in such a way that this drift element carrying a lower voltage as compared to other drift elements carrying a higher voltage entirely surrounds all the drift elements carrying higher voltages.

### SUMMARY OF THE INVENTION

An object of the present invention is to avoid danger of electrical breakdown and corresponding limitations of drift voltages. Therefore the object of the present invention may be seen in providing for an improved semiconductor drift detector.

The object of the present invention is solved by the subject-matter of independent claim 1. Further embodiments and advantages of the invention are incorporated in the dependent claims and are derivable from the following description.

In particular, the present invention allows the connection of the readout electrode and the integrated electronics to bond pads located outside of the drift structure without the need of crossing high voltage carrying drift rings. In this way the danger of an electrical breakdown and corresponding limitations of drift voltages can be avoided. Detail thereabout and embodiments thereof will be explained hereinafter.

Where an indefinite or definite article is used when referring to a singular noun, e.g. "a", "an" or "the", this includes a plurality of that noun unless something else is specifically stated. The terms "about" or "approximately" in the context of the present invention denote an interval of accuracy that the person skilled in the art will understand to still ensure the technical effect of the feature in question. The term typically indicates deviation from the indicated numerical value of ±20 %, preferably ±15 %, more preferably ±10 %, and even more preferably ±5 %. Furthermore, the terms "first", "second", "third" or "(a)", "(b)", "(c)", "(d)" or "(i)", "(ii)", "(iii)", "(iv)" etc. and the like in the description.and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In case the terms "first", "second", "third" or "(a)", "(b)", "(c)", "(d)" or "(i)", "(ii)", "(iii)", "(iv)" etc. relate to steps, of a functionality of a detector or of a method or use there is no time or time interval coherence between the steps unless indicated otherwise, i.e. the steps may be carried out simultaneously or there may be time intervals of seconds, minutes, hours, days, weeks, months or even years between such steps, unless otherwise indicated in the application as set forth herein above or below.

Technical terms are used herein by their common sense. If a specific meaning is conveyed to certain terms, definitions of terms will be given in the following in the context of which the terms are used.

It should be noted that the term "semiconductor drift detector" will be used in the context of the present invention synonymously with the term detector and the abbreviation SDD.

In the context of the present invention the term "drift element" can be exemplarily understood as drift ring, however, also drift elements having other forms, shapes or geometries which do not have an entire ring form are comprised by the term drift element as used herein. In general a drift element is to be understood as an electrode which generates together with the other drift elements a drift field in the semiconductor substrate through which the signal electrons generated by the radiation are caused to drift to the read out contact that detects the signal electrons and thus the absorbed radiation.

The present invention, is defined according to claim 1.

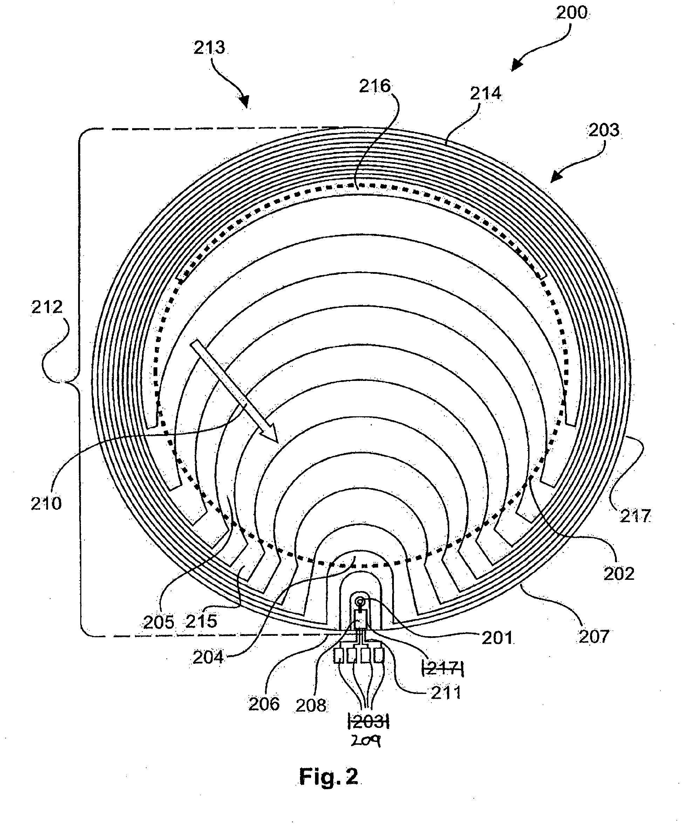

As a consequence of the concept for an SDD as presented herein, the read out contact is not totally spatially enclosed by all drift elements or is not surrounded by at least some of the drift elements of the detector such that the read out contact can be electrically contacted in an improved manner. This graphically illustrated in the embodiments shown in Figs. 2, 3 and 4. In embodiments of the sensor the drift elements with a high potential difference are not crossed by the electrical connections of the read out contact, but the electrical connections may cross other drift elements with a low potential difference with respect to the connections. Details thereabout will be explained hereinafter. It should be noted that the feature of connections "crossing drift elements" shall be understood as bridging drift elements in the sense of a geometry in which the connections are guided over said drift elements.

Furthermore, it is possible by means of the detector of the present invention to integrate even complex read out electronics directly into the sensor without space restrictions. In other words, a novel drift field configuration or drift element configuration is disclosed which can be used particularly but of course not only for large sized drift detectors. In the context of the present invention "large sized drift detector" may have dimensions from several square mm, like e.g. 5 mm², up to wafer size as known to the skilled person. The herein presented semiconductor drift detector is ideally suited for all high energy resolution requirements in scanning and transmission electron microscopes (SEM and TEM) as well as for X-ray fluorescence spectroscopy (XRF) applications. Details hereabout will be explained hereinafter.

A voltage gradient is applied during operation of the semiconductor drift detector by means of the drift elements. Although the drift element voltages can be supplied individually, it is more convenient to supply only voltages to the innermost and outermost drift element and generate the intermediate voltages by an integrated voltage divider of the detector. Both options are comprised by the present invention.

Advantageously the detector of the present invention can be driven with very high drift voltages as the electrical connections between the read out element and the bond pads do not cross the drift elements at which high or the highest voltages are applied. Thus in the detector of the present invention electrical breakdowns of the insulator or avalanche generation inside the semiconductor substrate can be avoided as the connections do not cross a too large voltage differences. This is facilitated by the novel drift field configuration or drift element configuration as disclosed herein.

The herein presented semiconductor drift detector of the present invention allows for a new geometry with respect to the read out contact and the plurality of drift elements of the detector. In contrast to the prior art semiconductor drift detectors as shown exemplarily in Figs. 1a and 1b, the semiconductor drift detector of the present invention is structured such that at least the drift element carrying the highest voltage does not entirely surround the read out contact. Thus, at least one drift element, some or all drift elements are not entirely guided around the read out contact but only partially surround the read out contact. As can be seen for example shown in Fig. 2, such drift elements may be provided as drift rings. Some of the drift elements may have a sickle shaped form, which only partially surround the read out contact and thus are not guided around the entire circumference of the read out contact. This is an entire different drift element configuration as compared to the prior art configurations depicted in Figs. 1a and 1b.

It should be noted that a semiconductor drift detector typically comprises a so called "sensitive volume" which can be understood as the charge collection area of the detector in which charges are generated if the radiation hits the semiconductor substrate. Furthermore, the sensitive volume is the region for which it is ensured that signal charge carriers that are generated therein do reach the read out contact. In the sensitive volume the substrate is fully depleted. Typically, the sensitive volume is defined or covered by an external collimator. This collimator is located in front of the sensor entrance window and prevents radiation from entering the fringe region of the drift volume which is only partially depleted leading to partial collection of signals. For a given SDD the skilled person can easily determine the sensitive volume.

Some or all drift elements of the detector of the present invention may extend with a respective outer section outside of the sensitive volume of the semiconductor drift detector. Thus, the drift elements may extend with their outer section into an un-central, outlying area of the semiconductor drift detector which is not sensitive for radiation and thus does not detect radiation. In this outlying area the drift elements may also provide for the functionality of guard rings. The guard ring functionality in semiconductor drift detectors is in principle known by the person skilled in the art, see for example "Semiconductor radiation detectors", Gerhard Lutz, Springer, 1998. Guard rings or drift elements with guard ring functionality facilitate or ensure a controlled decrease of the potential or the voltage and avoid high electrical fields that could extend to the non-depleted part of the semiconductor substrate. This feature of drift elements with guard ring functionality is realized in the embodiment shown in Fig. 2.

The read out contact may be located non-centrally, i.e., may be located not in the centre of the detector. It should further be noted that the read out contact might be embodied in different ways. The read out contact may be located outside of the sensitive volume of the detector. In other words, a SDD structure can be presented with an outlying collection electrode, as depicted in the embodiments of Figs. 2, 3 and 4. In an example, the semiconductor drift detector has a geometrical centre and the single read out contact is not located in the geometrical centre of the detector. Further, the read out contact may comprise e.g. a read out anode and an integrated field effect transistor, as principally shown in Fig. 1 a. Such a read out configuration can be combined with the novel geometry of the drift elements as described herein. Other possibilities will be described in detail hereinafter.

Furthermore, the semiconductor drift detector of the present invention may be provided with different geometrical shapes. In particular, the semiconductor drift detector may have a circular shape but may for example also have a rectangular, trapezoidal, or the shape of a segment of a circle, or the shape of a droplet. Also other shapes and combinations of the aforementioned shapes may be seen as embodiments of the present invention.

Furthermore, the detector of the present invention may also comprise drift elements on both sides of the substrate, i.e., the wafer.

According to another exemplary embodiment of the present invention the semiconductor drift detector comprises a single read out contact.

This is in contrast to prior art SDDs in which a plurality of detectors, particularly a row of detectors, are used to detect charges which are driven in an unfocused way parallel to each other towards the plurality of read out contact. In said prior art devices the position of the respective read out contact and the drift time allow for determining the position of the detected radiation. However, this embodiment of the present invention ensures that all signal charge carriers that are generated in the sensitive volume of the substrate are driven and caused to drift to the same read out contact of the semiconductor drift detector. As can be gathered from for example Fig. 2 all drift elements focus the charges towards one read out contact.

According to another embodiment of the present invention, the plurality of drift elements comprises at least five drift elements, at least eight drift elements, at least ten drift elements, at least fifteen drift elements, or at least twenty drift elements and none of these drift elements entirely surrounds the read out contact, in particular not the drift element which carries the highest voltage.

In this way in can be avoided that high voltage carrying drift elements need to be crossed by electrical connections of the read out contact. In other words, the electrical connections do not spatially cross any or a too high voltage carrying drift element along their extension from the read out contact to e.g. a bond pad of the detector.

According to another embodiment of the present invention, the detector comprises a fringe, a connection from the read out contact towards the fringe and the plurality of drift elements is configured in such a way that the connection from the readout contact to the fringe of the semiconductor drift detector does at least not cross the drift element to which highest voltage is applied.

According to another embodiment of the present invention, at least one of the drift elements extends around the read-out contact without entirely surrounding the read out contact, and extends around the read out contact such that it provides a guard ring functionality for the semiconductor drift detector.

Guard rings or drift elements with guard ring functionality facilitate or ensure a controlled decrease of the potential or the voltage and avoid high electrical fields that could extend to the non-depleted part of the semiconductor substrate. This feature of drift elements with guard ring functionality is realized in the embodiment shown in Fig. 2 and will be explained in more detail in the context of Fig. 2. The functionality of guard rings ensures that a controlled decrease of the potential or the voltage gradient is applied and also avoids high electrical fields reaching to the non-depleted substrate of the semiconductor drift detector. According to a further embodiment, at least one of the drift elements is returned outside of the sensitive volume in such a way as not to enclose the read out contact and to provide the function of guard rings of the semiconductor drift detector.

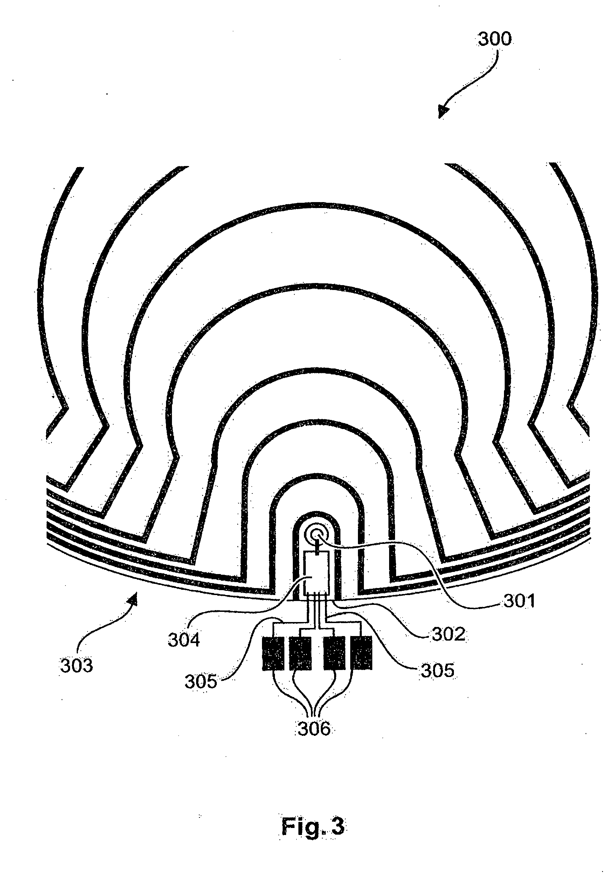

According to another embodiment of the present invention, the drift element to which the lowest voltage is applied is the only drift element of the detector which entirely surrounds the read out contact. This feature is also comprised in the exemplary embodiment of Figs. 2 and 3. All the remaining drift elements do not entirely surround the read out contact. Thus, only very small voltage differences which are acceptable when evaluating the risk of an electrical breakdown of the insulator or an avalanche generation inside the semiconductor substrate.

According to another embodiment of the present invention, the semiconductor drift detector is configured to apply the respective voltage to the plurality of drift elements such that a voltage gradient between the drift elements towards the read out contact is applied. Further, except the drift element carrying the lowest voltage, the plurality of drift elements is arranged in such a way that a drift element carrying a lower voltage as compared to other drift elements carrying a higher voltage entirely surround all the drift elements carrying higher voltages.

The following explanation holds true for some or all drift elements except the drift element carrying the lowest voltage, i.e., the most inner drift element. A drift element carrying x volts spatially surrounds, encloses or encircles all other drift elements carrying a voltage that is larger/ larger or equal than x volts. This geometry of the drift elements can be exemplarily gathered from Fig. 2. In this embodiment of Fig. 2 this holds true for all drift elements except the drift element carrying the lowest voltage.

According to the present invention, the semiconductor drift detector is configured to apply the respective voltage to the plurality of drift elements such that a voltage gradient between the drift elements towards the read out contact is applied, wherein at least one of the plurality of drift elements is arranged in such a way that this drift element carrying a lower voltage as compared to other drift elements carrying a higher voltage entirely surrounds all the drift elements carrying higher voltages.

According to another embodiment of the present invention, the drift elements are embodied as drift rings and each drift ring has a sickle shaped geometry. At least two of the sickle shaped drift rings only partially surround the read out contact. This embodiment can particularly be combined with the previously described embodiment. A very detailed exemplary embodiment which also realizes the sickle shaped geometry can be gathered from Figs. 2 and 3.

According to another embodiment of the present invention the readout contact is embodied as a DEPFET structure comprising an internal gate and the internal gate of the DEPFET is configured for collecting signal charge carriers.

Here the Internal Gate - a potential minimum below the transistor channel of the FET takes the role of the signal collection electrode. The charge collected within the Internal Gate induces mirror charge in the channel thereby increasing its conductivity and the transistor current.

According to another embodiment of the present invention, the detector comprises read out electronics, wherein the read out electronics and the read out contact are entirely surrounded by the drift element to which the lowest voltage is applied and are not entirely surrounded by the remaining drift elements out of the plurality of drift elements.

According to another embodiment of the present invention, the semiconductor drift detector comprises at least one bond pad and electrical connections which extend from the read out contact or read out electronics to the at least one bond pad. The detector may of course also have a plurality of bond pads, as for example shown in Figs. 2 and 3. In this embodiment, the semiconductor drift detector is configured to provide at least some or all drift elements of the plurality of drift elements with a respective voltage such that a voltage gradient between the drift elements towards the read out contact is applied at the drift elements. The electrical connections furthermore do not spatially cross the drift element to which the highest voltage is applied along their extension from the read out contact to the at least one bond pad.

It should be noted that this embodiment of the present invention can be applied for example only for the drift elements with a high potential difference. In other words, the electrical connections are guided in such a way that they do not spatially cross the voltage gradient or the highest possible voltage gradient between the drift elements of the detector. Small differences in the voltage may be crossed by the electrical connections and the user may certainly define a threshold of a difference in potential or voltage that is acceptable for the electrical connections to cross. In partlcular, examples of the voltage gradient between the drift elements which are spatially not crossed by the electrical connections may be 1 V, 5 V, 10 V, 15 V, 20 V, 25 V, 50 V, 100 V, 150 V, or even more. In case very high voltages would have to be crossed, an isolator of the semiconductor drift detector might break and if very high electrical fields occur, this may lead to disadvantageous avalanche effects.

In general, the read out electronics of the detector may comprise or provide for several functionalities like for example the functionality of a charge sensitive amplifier, a cache memory or a buffer, and may also provide corrections of linearity or may provide corrections of ballistical losses.

According to another embodiment of the present invention, the detector comprises a plurality of bond pads, wherein the electrical connections connect the read out electronics with the bond pads, and wherein the bond pads are located outside of an area defined by the drift elements. This geometry feature will be explained in more detail by means of the embodiment of Fig. 2. There, the bond pads 209 are located outside of the area 212 which is defined by the drift elements. Particularly the bond pads are not surrounded or enclosed by any of the drift elements of the detector.

According to another embodiment of the present invention, a multichannel semiconductor drift detector is presented which comprises at least two semiconductor drift detectors according to any of the embodiments described hereinbefore or hereinafter, wherein the at least two semiconductor drift detectors are located on the same substrate.

In other words a single substrate is disclosed on which two or more detector structures as described before are arranged together.

In such a multichannel SDD of the present invention several different sensitive volumes are comprised wherein each sensitive volume is associated with its read out contact such that each respective sensitive volume in cooperation with the respective drift elements cause the generated signal charge carriers to drift towards the respectively associated read out contact. In other words, a such a multichannel SDD comprises a first sensitive volume, a first read out contact and a first plurality of drift elements as has been described before. In addition, this multichannel SDD further comprises at least a second sensitive volume, at least a second read out contact and at least a second plurality of drift elements. The basic principle, advantages and geometries as described before or hereinafter fully apply to this embodiment in which two or more sensitive volumes, two or more read out contacts and two or more plurality of drift elements make use of the present invention as set forth herein.

According to another embodiment of the present invention, a system for detecting radiation is presented which comprises a semiconductor drift detector according to any of the SDD or multichannel SDD described hereinbefore or hereinafter, and wherein the system is one of a scanning electron microscope (SEM), a transmission electron microscope (TEM), or an X-ray fluorescence spectroscope (XRF).

It is the gist of the present invention to provide for a SDD in which the electrical connections between the read out contact and the bond pads and/or the electrical connections between read out electronics and the bond pads do not cross drift elements which define a voltage difference of a certain threshold, as is defined in appended claim 1. The threshold may be determined by the user of the present invention. In particular, the drift elements of the semiconductor drift detector, particularly at least one drift element, does not or do not entirely surround the read out contact. The read out contact is located outside of the sensitive volume or the charge collection area, depicted for example in Fig. 2. The read out contact is not enclosed or surrounded by those drift rings or drift elements to which high voltages are applied. Therefore, the electrical connections between the bond pads and/or the read out electronics to the read out contact do not have to be guided over sections of drift rings to which a large voltage is applied. A large voltage difference may range from 1 V, 5 V, 10 V, 15 V, 20 V, 25 V, 50 V, 100 V, and 150 V in the context of the present invention.

### BRIEF DESCRIPTION OF THE DRAWINGS

Embodiments of the invention will be described in the following drawings.
Fig. 1a schematically shows a semiconductor drift detector with integrated front-end transistor as known in the prior art.
Fig. 1b schematically shows a semiconductor drift detector with asymmetric geometry and a guard-ring structure as known in the prior art.
Fig. 2 schematically shows a semiconductor drift detector with a guard-ring structure according to an exemplary embodiment of the present invention.
Fig. 3 schematically shows a part of the semiconductor drift detector of Fig. 2.
Fig. 4 schematically shows a semiconductor drift detector with a guard-ring structure according to another exemplary embodiment of the present invention.

In principle, identical parts are provided with the same or similar reference symbols in the figures.

### DETAILED DESCRIPTION OF EMBODIMENTS

Fig. 1a schematically shows a semiconductor drift detector according to the prior art The detector 100 comprises an n-type silicon substrate 101 depleted from both sides. A homogeneous, shallow p+-n junction on the side where the incoming radiation enters the detector is shown as well as a structure of circular p+ drift rings 110 to 112. By applying a negative voltage on the homogeneous back side 102, i.e., the radiation entrance window, and by applying an increasingly negative voltage 108 on the drift rings, a potential field distribution is created inside the detector such that the electrons 109 generated by the absorption of the ionizing radiation drift towards the collection anode 107. The collection anode is located in the centre of the device 100. The detector 100 further comprises an integrated field effect transistor which comprises source 104, gate 105, and a drain 106. All elements mentioned before may be combined with the detector of the present invention as set forth herein and as illustrative explained in the context of Fig. 2.

Fig. 1b schematically shows a semiconductor drift detector with asymmetric geometry and a guard-ring structure as known in the prior art. This detector 113 comprises several drift rings 115 and 116 which entirely surround the read out contact 118. The drift of the charge carriers is depicted by arrows 117. The drift ring 114 which carries the highest voltage also entirely surrounds the read out contact 118. The guard rings are depicted with sign 119. The inventors of the present invention found that the drift ring configurations used in the prior art entail the risk of high electric fields and the danger of electrical breakdown.

In contrast to the detectors 100 and 113, Fig. 2 shows an embodiment of a semiconductor drift detector 200 with a guard-ring structure of the present invention. The detector 200 comprises a semiconductor substrate in which signal charge carriers are generated during operation of the semiconductor drift detector. Also a radiation entrance window (not shown) on a first side of the semiconductor substrate is comprised. Furthermore, a single read out contact 201 and a plurality of drift elements 203 are shown which are configured for driving the generated signal charge carriers towards the single read out contact 201. The drift elements 203 and the read out contact 201 are located on the second side of the substrate which is opposite of the first side. In Fig. 2 only the second side of detector 200 is shown. As will be apparent to the skilled reader, the semiconductor drift detector 200 is configured to focus signal charge carriers which are generated in the substrate towards the read out contact 201 due to the voltage gradient applied to the drift elements 203. The direction 210 along which the generated signal charge carriers are drifting during the operation of the detector 200 is shown by arrow 210. As can be gathered from Fig. 2 at least the drift element 216 to which the highest voltage is applied does not entirely surround the read out contact 201. Actually, in the embodiment of Fig. 2 only the most inner drift element 217 to which the lowest voltage is applied does surround contact 201 entirely. The read out contact 201 is located near the rim and outside of the sensitive volume of detector. 200. The read out contact can be seen as a collection anode. Furthermore, a plurality of bond pads 209 are shown in Fig. 2 which are also located outside of the sensitive volume and outside of the area 212 which is defined by the drift elements.

Furthermore, electrical connections 211 which extend from the read out contact and/or from the read out electronics towards the bond pads 209 are shown. The read out contact 201 is connected to read out electronics 208 which is connected with the plurality of bond pads 209. The semiconductor drift detector 200 is configured to provide the drift elements with a respective voltage such that a voltage gradient between the drift elements towards the read out contact 201 is realized. Furthermore, the electrical connections 211 do not spatially cross high voltage carrying drift electrodes and the gaps between the drift elements of the detector 200 along their extension from the read out contact 201 to the bond pads 209. The detector 200 of Fig. 2 is provided with a circular shape 213. Most of the drift elements 203 comprise a respective inner section 204, 205 and comprise an outer section 214, 215. The outer sections of these drift elements are located outside of the sensitive volume 202 and provide a guard ring functionality. Guard rings or drift elements with guard ring functionality ensure a controlled decrease of the potential or the voltage and avoid high electrical fields that could extend to the non-depleted part of the semiconductor substrate or create avalanche breakdown. Adjacent to the lower end 206 of detector 200 an area is defined where the bond pads 206 are located. It should be noted that in an embodiment of the detector 200, a voltage may only be applied externally to the first and the last drift element, i.e., the most inner and the most outer drift element. The intermediate drift elements between the first and the last drift elements may receive their potential via an integrated voltage divider of the detector.

The detector 200 of Fig. 2 comprises a volume of n-type silicon bulk depleted from both sides and a homogeneous, shallow p+-n junction on the side where the incoming radiation enters the detector. Furthermore, the drift elements constitute a structure of p+ drift rings on the opposite side. By applying a negative voltage on the homogeneous back side, i.e., the radiation entrance window, and an increasingly negative voltage on the drift rings, a potential field distribution, i.e., a voltage gradient, is created inside the detector such that the electrons generated by the absorption of ionizing radiation drift towards the collecting anode 201.

In the detector 200 all drift elements 203, except the drift element 217 carrying the lowest voltage, are arranged in such a way that a drift element carrying a lower voltage as compared to other drift elements carrying a higher voltage entirely surround all the drift elements carrying higher voltages. In other words, a drift element carrying x volt spatially surrounds, encloses or encircles all other drift elements carrying a voltage that is larger/ larger or equal than x volts. This is realized by an outer part 207 of the drift elements which elongates around the other drift elements carrying higher voltages. In this way the guard ring functionality can be provided. In this way the detector 200 also comprises guard rings 217.

In an alternative embodiment similar to the one of Fig. 2, the detector may comprise a connection from the read out contact towards the fringe of the detector wherein the plurality of drift elements is configured in such a way that the connection from the readout contact to the fringe of the semiconductor drift detector does at least not cross the drift element 216 to which highest voltage is applied.

Fig. 3 schematically shows an enlarged view of a part of the semiconductor drift detector of Fig. 2. The detector 300 comprises the read out contact 301 and a plurality of drift elements 303 which are configured for driving the generated signal charge carriers towards the read out contact 301. Except the most inner drift element 302, all other drift elements of detector 300 do not entirely surround the read out contact 301 and do not entirely surround the read out electronics 304. Advantageously, the detector 300 allows that any electrical connection 305 (from the read out contact 301 to the read out electronics 304 and from the read out electronics 304 to the bond pads 306) does not cross any section of the drift elements besides the most inner, low voltage carrying drift element. Therefore, the detector of the present invention can advantageously be driven with very high drift voltages as the electrical connections do not cross the drift elements at which high or the highest voltages are applied. Thus in the detector of the present invention electrical breakdown of the insulator or avalanche generation inside the semiconductor substrate can be avoided as the connections do not cross a too large voltage differences. This is facilitated by the novel drift field configuration or drift element configuration as disclosed herein and described for the embodiment of Fig. 3.

The detector 300 of Fig. 3 also provides for a monolithic integration of the read out electronics. The read out electronics 309 may comprise or provide for several functionality like for example a charge sensitive amplifier, a cache memory, or a buffer, and may also provide corrections of linearity or may provide corrections of ballistic losses. The semiconductor drift detector 300 can advantageously be operated with high drift voltages without causing an electrical shortcut. Due to the omission of the space restrictions it is further possible to integrate additional electronics with additional functions into the sensor 300. Although the sensor 300 is depicted with a circular shaped sensitive volume when depicted in the top view, also other shapes like for example rectangular shape, a trapezoidal shape or the shape of a segment of a circle and other shapes are possible embodiments.

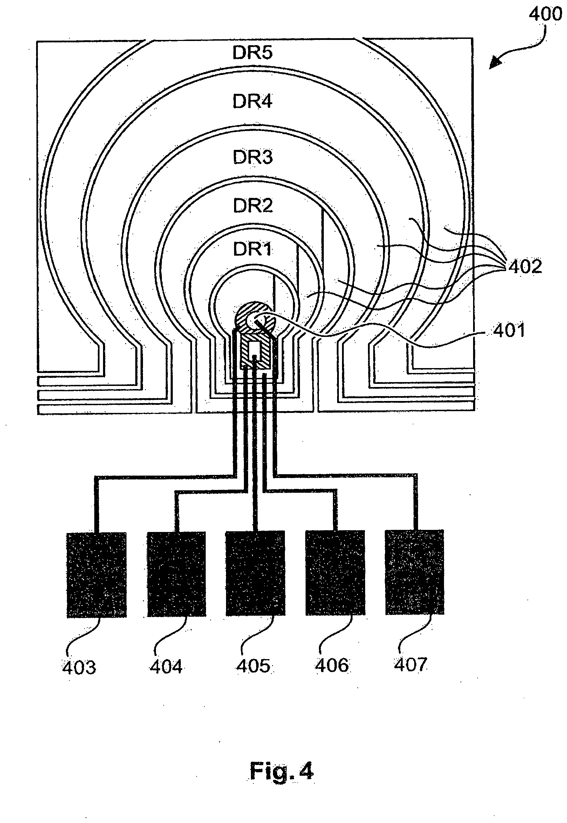

According to another embodiment of the present invention, Fig. 4 shows a part of a semiconductor drift detector 400 which comprises a read out contact 401 and a plurality of drift elements 402 (DR1-DR5). The two most inner drift elements entirely surround the read out contact 401. Here the readout contact 401 is embodied as a DEPFET structure comprising an internal gate and the internal gate of the DEPFET is configured for collecting signal charge carriers. The Internal Gate, not shown here, is a potential minimum below the transistor channel of the FET takes the role of the signal collection electrode. The charge collected within the Internal Gate induces mirror charge in the channel thereby increasing its conductivity and the transistor current. The detector 400 comprises a gate 403, cleargate 404, clear 405, source 406, and drain 407.

This detector 400, as well as the detectors of Figs. 2 and 3 can be advantageously used in scanning electron microscopes (SEM), transmission electron microscopes (TEM), or X-ray fluorescence spectroscopes (XRF). Such SEMsm TEMs and XRFs represent further embodiments of the present invention.

This detector 400, as well as the detectors of Figs. 2 and 3 make use of asymmetrical drift elements, however also a combination of asymmetrical drift elements and symmetrical drift elements may be used without departing from the scope of the present invention.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. Any reference signs in the claims should not be construed as limiting the scope of the claims.

## Claims

1. A semiconductor drift detector (200, 300, 400) for detecting radiation, the semiconductor drift detector comprising
a semiconductor substrate in which signal charge carriers are generated during operation of the semiconductor drift detector,
a radiation entrance window on a first side of the semiconductor substrate,
at least one read out contact (201, 301, 401),
a plurality of drift elements (203) configured for driving the generated signal charge carriers towards the read out contact,
wherein the semiconductor drift detector is configured to focus signal charge carriers which are generated in the substrate towards the read out contact,
wherein the plurality of drift elements and the read out contact are located on a second side of the substrate, wherein the second side is opposite of the first side of the substrate,
wherein the semiconductor drift detector is configured to apply a respective voltage to each of the plurality of drift elements,
wherein the semiconductor drift detector is configured to apply the respective voltage to the plurality of drift elements such that a voltage gradient between the drift elements towards the read out contact is applied,
wherein at least the drift element (216) out of the plurality of drift elements to which the highest voltage is applied does not entirely surround the read out contact and
**characterized in that** at least one of the plurality of drift elements is arranged in such a way that this drift element carryihg a lower voltage as compared to other drift elements carrying a higher voltage entirely surrounds all the drift elements carrying higher voltages.

2. A semiconductbr drift detector according to claim 1,
wherein the semiconductor drift detector comprises a single read out contact.

3. A semiconductor drift detector according to any of the preceding claims,
wherein the plurality of drift elements comprises at least five drift elements, at least eight drift elements, at least ten drift elements, at least fifteen drift elements, or at least twenty drift elements, and
wherein none of said drift elements entirely surrounds the read out contact.

4. A semiconductor drift detector according to any of the preceding claims, the semiconductor drift detector further comprising
a fringe,
a connection from the read out contact towards the fringe, and
wherein the plurality of drift elements is configured in such a way that the connection from the readout contact towards the fringe of the semiconductor drift detector does at least not cross the drift element to which highest voltage is applied.

5. A semiconductor drift detector according to any of the preceding claims,
wherein at least one of the drift elements extends around the read-out contact without entirely surrounding the read out contact, and extends around the read out contact such that it provides a guard ring functionality for the semiconductor drift detector.

6. A semiconductor drift detector according to any of the preceding claims except for claim 3, or claim 4 when claim 4 depends on claim 3, or except for claim 5 when claim 5 depends on claim 3,
wherein the drift element to which the lowest voltage is applied is the only drift element which entirely surrounds the read out contact.

7. A semiconductor drift detector according to any of the preceding claims,
wherein the readout contact is embodied as a DEPFET structure comprising an internal gate, and
wherein the internal gate of the DEPFET is configured for collecting signal charge carriers.

8. A semiconductor drift detector according to any of the preceding claims, the semiconductor drift detector further comprising
read out electronics (208, 309),
wherein the read out electronics and the read out contact are entirely surrounded by the drift element to which the lowest voltage is applied and are not entirely surrounded by the remaining drift elements out of the plurality of drift elements.

9. A semiconductor drift detector according claim 8, the semiconductor drift detector further comprising
at least one bond pad (209),
electrical connections (211, 311),
wherein the electrical connections extend from the read out electronics to the at least one bond pad, and
wherein the electrical connections do not spatially cross the drift element to which the highest voltage is applied along their extension from the read out contact to the at least one bond pad.

10. A semiconductor drift detector according to claim 9, further comprising
a plurality of bond pads,
wherein the electrical connections connect the read out electronics with the bond pads, and
wherein the bond pads are located outside of an area (212) defined by the drift elements.

11. A multichannel semiconductor drift detector, the detector comprising
at least two semiconductor drift detectors according to any of claims 1 to 10, and
wherein the at least two semiconductor drift detectors are located on the same substrate.

12. System for detecting radiation, the system comprising
a semiconductor drift detector according to any of claims 1 to 10 or a multichannel semiconductor drift detector according to claim 11, and
wherein the system is one of a scanning electron microscope (SEM), a transmission electron microscope (TEM), or an X-ray fluorescence spectroscope (XRF).

## Patentansprüche

1. Halbleiter-Driftdetektor (200, 300, 400) zum Erfassen von Strahlung, wobei der Halbleiter-Driftdetektor aufweist
ein Halbleitersubstrat, in dem während des Betriebs des Halbleiter-Driftdetektors Signalladungsträger erzeugt werden,
ein Strahlungseintrittsfenster auf einer ersten Seite des Halbleitersubstrats, mindestens einen Auslesekontakt (201, 301, 401),
eine Vielzahl von Driftelementen (203), die eingerichtet sind, um die erzeugten Signalladungsträger in Richtung des Auslesekontaktes zu treiben,
wobei der Halbleiter-Driftdetektor eingerichtet ist, um Signalladungsträger, die im Substrat erzeugt werden, auf den Auslesekontakt zu fokussieren,
wobei die Vielzahl von Driftelementen und der Auslesekontakt auf einer zweiten Seite des Substrats angeordnet sind, wobei die zweite Seite gegenüber der ersten Seite des Substrats liegt,
wobei der Halbleiter-Driftdetektor eingerichtet ist, um eine entsprechende Spannung an jedes der Vielzahl von Driftelementen anzulegen,
wobei der Halbleiter-Driftdetektor eingerichtet ist, um die jeweilige Spannung an die Vielzahl von Drift-Elementen anzulegen, so dass ein Spannungsgradient zwischen den Drift-Elementen in Richtung des Auslesekontaktes angelegt wird,
wobei mindestens das Driftelement (216) aus der Vielzahl der Driftelemente, an die die höchste Spannung angelegt wird, den Auslesekontakt nicht vollständig umschließt und
**dadurch gekennzeichnet, dass** mindestens eines der Vielzahl von Driftelementen so angeordnet ist, dass dieses Driftelement, das eine niedrigere Spannung trägt, als andere Driftelemente, die eine höhere Spannung tragen, alle Driftelemente, die höhere Spannungen tragen, vollständig umgibt.

2. Halbleiter-Driftdetektor nach Anspruch 1,
wobei der Halbleiter-Driftdetektor einen einzelnen Auslesekontakt aufweist.

3. Halbleiter-Driftdetektor gemäß einem der vorstehenden Ansprüche,
wobei die Vielzahl von Driftelementen mindestens fünf Driftelemente, mindestens acht Driftelemente, mindestens zehn Driftelemente, mindestens fünfzehn Driftelemente oder mindestens zwanzig Driftelemente aufweist und
wobei keines der Driftelemente den Auslesekontakt vollständig umgibt.

4. Halbleiter-Driftdetektor nach einem der vorhergehenden Ansprüche, wobei der Halbleiter-Driftdetektor ferner aufweist
ein Rand,
eine Verbindung vom Auslesekontakt zum Rand hin, und
wobei die Vielzahl von Driftelementen so eingerichtet ist, dass die Verbindung vom Auslesekontakt zum Rand des Halbleiter-Driftdetektors zumindest nicht das Driftelement kreuzt, an das die höchste Spannung angelegt wird.

5. Halbleiter-Driftdetektor gemäß einem der vorhergehenden Ansprüche, wobei sich mindestens eines der Driftelemente um den Auslesekontakt herum erstreckt, ohne den Auslesekontakt vollständig zu umgeben, und sich um den Auslesekontakt herum erstreckt, so dass er eine Schutzringfunktionalität für den Halbleiter-Driftdetektor bereitstellt.

6. Halbleiter-Driftdetektor nach einem der vorstehenden Ansprüche mit Ausnahme von Anspruch 3 oder Anspruch 4, wenn Anspruch 4 von Anspruch 3 abhängt, oder mit Ausnahme von Anspruch 5, wenn Anspruch 5 von Anspruch 3 abhängt,
wobei das Driftelement, an das die niedrigste Spannung angelegt wird, das einzige Driftelement ist, das den Auslesekontakt vollständig umgibt.

7. Halbleiter-Driftdetektor gemäß einem der vorhergehenden Ansprüche, wobei der Auslesekontakt als DEPFET-Struktur mit einem internen Gate ausgebildet ist, und
wobei das interne Gate des DEPFET eingerichtet ist, um Signalladungsträger zu sammeln.

8. Halbleiter-Driftdetektor nach einem der vorhergehenden Ansprüche, wobei der Halbleiter-Driftdetektor ferner aufweist
Ausleseelektronik (208, 309),
wobei die Ausleseelektronik und der Auslesekontakt vollständig von dem Driftelement umgeben sind, an das die niedrigste Spannung angelegt wird, und nicht vollständig von den verbleibenden Driftelementen aus der Vielzahl der Driftelemente umgeben sind.

9. Halbleiter-Driftdetektor nach Anspruch 8, wobei der Halbleiter-Driftdetektor ferner Folgendes aufweist
mindestens ein Bondpad (209),
elektrische Anschlüsse (211, 311),
wobei sich die elektrischen Verbindungen von der Ausleseelektronik bis zum mindestens einen Bondpad erstrecken, und
wobei die elektrischen Verbindungen das Driftelement, an das die höchste Spannung angelegt wird, entlang ihrer Ausdehnung vom Auslesekontakt zum mindestens einen Bondpad nicht räumlich kreuzen.

10. Halbleiter-Driftdetektor nach Anspruch 9, ferner umfassend
eine Vielzahl von Bondpads,
wobei die elektrischen Verbindungen die Ausleseelektronik mit den Bondpads verbinden, und
wobei die Bond-Pads außerhalb eines Bereichs (212) angeordnet sind, der durch die Driftelemente definiert ist.

11. Mehrkanaliger Halbleiter-Driftdetektor, wobei der Detektor aufweist mindestens zwei Halbleiter-Driftdetektoren nach einem der Ansprüche 1 bis 10 und wobei die mindestens zwei Halbleiter-Driftdetektoren auf dem gleichen Substrat angeordnet sind.

12. System zum Erfassen von Strahlung, wobei das System aufweist einen Halbleiter-Driftdetektor nach einem der Ansprüche 1 bis 10 oder einen mehrkanaligen Halbleiter-Driftdetektor nach Anspruch 11 und
wobei das System eines von einem Rasterelektronenmikroskop (REM), einem Transmissionselektronenmikroskop (TEM) oder einem Röntgenfluoreszenzspektroskop (XRF) ist.

## Revendications

1. Un détecteur de dérive à semi-conducteur (200, 300, 400) pour détecter un rayonnement, le détecteur de dérive à semi-conducteur comprenant
un substrat semi-conducteur dans lequel des porteurs de charge de signal sont générés pendant le fonctionnement du détecteur de dérive à semi-conducteur,
une fenêtre d'entrée de rayonnement sur un premier côté du substrat semi-conducteur,
au moins un contact de lecture (201, 301, 401),
une pluralité d'éléments de dérive (203) configurés pour entraîner les porteurs de charge de signal générés vers le contact de lecture,
le détecteur de dérive à semi-conducteur étant configuré pour focaliser les porteurs de charge de signal qui sont générés dans le substrat vers le contact de lecture,
la pluralité d'éléments de dérive et le contact de lecture étant situés sur un deuxième côté du substrat, le deuxième côté étant opposé au premier côté du substrat,
le détecteur de dérive à semi-conducteur étant configuré pour appliquer une tension respective à la pluralité d'éléments de dérive de telle sorte qu'un gradient de tension entre les éléments de dérive vers le contact de lecture soit appliqué,
au moins l'élément de dérive (126) parmi la pluralité d'éléments de dérive auxquels la tension la plus élevée est appliquée n'entourant pas entièrement le contact de lecture, et
**caractérisé en ce que**
au moins l'un des éléments faisant partie de la pluralité d'éléments de dérive est disposé de telle sorte que cet élément de dérive portant une tension inférieure à celle d'autres éléments de dérive portant une tension supérieure entoure entièrement tous les éléments de dérive portant des tensions supérieures.

2. Un détecteur de dérive à semi-conducteur selon la revendication 1,
dans lequel le détecteur de dérive à semi-conducteur comprend un contact de lecture unique.

3. Un détecteur de dérive à semi-conducteur selon l'une quelconque des revendications précédentes,
dans lequel la pluralité d'éléments de dérive comprend au moins cinq éléments de dérive, au moins huit éléments de dérive, au moins dix éléments de dérive, au moins quinze éléments de dérive, ou au moins vingt éléments de dérive, et
dans lequel aucun desdits éléments de dérive n'entoure entièrement le contact de lecture.

4. Un détecteur de dérive à semi-conducteur selon l'une quelconque des revendications précédentes, le détecteur de dérive à semi-conducteur comprenant en outre
une lisière,
une connexion allant du contact de lecture vers la lisière, et
la pluralité d'éléments de dérive étant configurée de telle sorte que la connexion allant du contact de lecture vers la lisière du détecteur de dérive à semi-conducteur ne traverse pas au moins l'élément de dérive auquel la tension la plus élevée est appliquée.

5. Un détecteur de dérive à semi-conducteur selon l'une quelconque des revendications précédentes,
dans lequel au moins l'un des éléments de dérive s'étend autour du contact de lecture sans entourer entièrement le contact de lecture, et s'étend autour du contact de lecture de telle sorte qu'il fournit une fonctionnalité d'anneau de garde pour le détecteur de dérive à semi-conducteur.

6. Un détecteur de dérive à semi-conducteur selon l'une quelconque des revendications précédentes, à l'exception de la revendication 3, ou de la revendication 4 lorsque la revendication 4 dépend de la revendication 3, ou à l'exception de la revendication 5 lorsque la revendication 5 dépend de la revendication 3,
dans lequel l'élément de dérive auquel la tension la plus basse est appliquée est le seul élément de dérive qui entoure entièrement le contact de lecture.

7. Un détecteur de dérive à semi-conducteur selon l'une quelconque des revendications précédentes,
dans lequel le contact de lecture est réalisé sous la forme d'une structure DEPFET comprenant une porte interne, et
dans lequel la porte interne du DEPFET est configurée pour collecter des porteurs de charge de signal.

8. Un détecteur de dérive à semi-conducteur selon l'une quelconque des revendications précédentes, le détecteur de dérive à semi-conducteur comprenant en outre
une électronique de lecture (208, 309),
l'électronique de lecture et le contact de lecture étant entièrement entourés par l'élément de dérive auquel la tension la plus basse est appliquée et ne sont pas entièrement entourés par les autres éléments de dérive parmi la pluralité d'éléments de dérive.

9. Un détecteur de dérive à semi-conducteur selon la revendication 8, le détecteur de dérive à semi-conducteur comprenant en outre
au moins un coussinet de connexion (209),
des connexions électriques (211, 311),
les connexions électriques s'étendant de l'électronique de lecture vers ledit au moins un coussinet de connexion, et
les connexions électriques ne traversant pas spatialement l'élément de dérive auquel la tension la plus élevée est appliquée le long de leur extension depuis le contact de lecture jusqu'à ledit au moins un coussinet de connexion.

10. Un détecteur de dérive à semi-conducteur selon la revendication 9, comprenant en outre
une pluralité de coussinets de connexion,
les connexions électriques connectant l'électronique de lecture aux coussinets de connexion, et
les coussinets de connexion étant situés à l'extérieur d'une zone (212) définie par les éléments de dérive.

11. Un détecteur de dérive à semi-conducteur à canaux multiples, le détecteur comprenant
au moins deux détecteurs de dérive à semi-conducteur selon l'une quelconque des revendications 1 à 10, et
dans lequel lesdits au moins deux détecteurs de dérive à semi-conducteur sont situés sur le même substrat.

12. Système de détection de rayonnement, le système comprenant
un détecteur de dérive à semi-conducteur selon l'une quelconque des revendications 1 à 10 ou un détecteur de dérive à semi-conducteur à canaux multiples selon la revendication 11, et
le système étant l'un parmi un microscope électronique à balayage (MEB), un microscope électronique à transmission (MET) ou un spectroscope à fluorescence à rayons (XRF).
